(19) Europäisches Patentamt / European Patent Office / Office européen des brevets

(11) **EP 3 564 548 A1**

(12) **EUROPEAN PATENT APPLICATION**
published in accordance with Art. 153(4) EPC

(43) Date of publication:
06.11.2019 Bulletin 2019/45

(21) Application number: 17888493.8

(22) Date of filing: 26.12.2017

(51) Int Cl.:
F16D 55/22 (2006.01)     F16D 65/02 (2006.01)
F16D 65/12 (2006.01)

(86) International application number:
PCT/JP2017/046816

(87) International publication number:
WO 2018/124150 (05.07.2018 Gazette 2018/27)

(84) Designated Contracting States:
AL AT BE BG CH CY CZ DE DK EE ES FI FR GB
GR HR HU IE IS IT LI LT LU LV MC MK MT NL NO
PL PT RO RS SE SI SK SM TR
Designated Extension States:
BA ME
Designated Validation States:
MA MD TN

(30) Priority: 27.12.2016  JP 2016254034
30.11.2017  JP 2017231160

(71) Applicant: Nippon Steel Corporation
Tokyo 100-8071 (JP)

(72) Inventors:
• KATO, Takanori
Tokyo 100-8071 (JP)
• SAKAGUCHI, Atsushi
Tokyo 100-8071 (JP)
• ASABE, Kazutaka
Tokyo 100-8071 (JP)
• MIYABE, Naruo
Tokyo 100-8071 (JP)

(74) Representative: Zimmermann & Partner
Patentanwälte mbB
Postfach 330 920
80069 München (DE)

(54) **DISC-BRAKE DEVICE**

(57)     The disk brake device (1) includes a brake disk (2), a brake lining (3), and a brake caliper (4). The brake lining (3) includes a friction member (9) and a base plate (10) for supporting the friction member (9). When a plurality of bolt holes (7) are projected onto a rear face (13) of the base plate (10) in a direction of an axle (5), a boundary (16) passes through areas of the projected bolt holes (7). The brake caliper (4) includes an inner pressing surface (17) that applies a load on an inner area (14) and an outer pressing surface (18) that applies a load on an outer area (15). The load applied on the inner area (14) from the inner pressing surface (17) is different from the load applied on the outer area (15) from the outer pressing surface (18). In this way, it is possible to suppress stress imposed on bolts while suppressing a local temperature rise in the brake disk.

FIG. 4

**Description**

TECHNICAL FIELD

The present invention relates to a disk brake device. In particular, the present invention relates to a disk brake device for a railway vehicle.

BACKGROUND ART

Along with an increase in high-speed railway vehicles, numerous disk brake devices are in use for braking such railway vehicles. In a disk brake device, a brake caliper applies a load on a brake lining. Consequently, the brake lining is pressed against a brake disk. The disk brake device gains a braking force from friction between a friction member of the brake lining and the brake disk.

Such friction between the friction member of the brake lining and the brake disk causes a temperature rise in the brake disk. In particular, the temperature of the brake disk is more likely to increase when the brake caliper applies a load on the brake lining in a small number of locations. An excessive temperature rise in the brake disk causes an immature wear of the brake disk and the brake lining. Accordingly, it is desirable to suppress such an excessive temperature rise in the brake disk.

For example, a disk brake device intended to suppress a temperature rise in the brake disk is described Japanese Patent Application Publication No. 2009-257578 (Patent Literature 1) and Japanese Patent Application Publication No. 2014-59011 (Patent Literature 2).

The disk brake device described in Patent Literature 1 includes a brake caliper that has a plurality of pressing surfaces. In the disk brake device of Patent Literature 1, the plurality of pressing surfaces apply a load on a brake lining. As a result, the load applied on the brake lining from the brake caliper is to be dispersed. Then, a pressure applied to a brake disk from the brake lining is to be reduced. In this way, as described in Patent Literature 1, a wear of the brake disk and the brake lining can be suppressed and a temperature rise in the brake disk and the brake lining during braking can be suppressed.

The disk brake device described in Patent Literature 2 includes a brake lining that includes a plurality of friction members and a swingable adjustment mechanism that supports each of a plurality of friction members. The swingable adjustment mechanism can apply a load on each of the plurality of friction members. As a result, each friction member can be pressed against a brake disk even if a sliding surface of the brake disk has unevenness. Accordingly, a pressure applied to the brake disk from one friction member is to be reduced. In this way, as described in Patent Literature 2, a local temperature rise in the brake disk can be suppressed and heat cracks in the brake disk can be suppressed.

CITATION LIST

PATENT LITERATURE

Patent Literature 1: Japanese Patent Application Publication No. 2009-257578
Patent Literature 2: Japanese Patent Application Publication No. 2014-59011

SUMMARY OF INVENTION

TECHNICAL PROBLEM

The brake disk is fastened to a wheel by a bolt. The disk brake devices in Patent Literature 1 and Patent Literature 2 suppress a local temperature rise in the brake disk, and thus an excessive temperature rise in the brake disk is avoided. Accordingly, an immature wear of the friction member of the brake lining and the brake disk is less likely to occur.

However, in the disk brake device of Patent Literature 1, an equal load is applied on the brake lining from each of the pressing surfaces. In the disk brake device of Patent Literature 2, an equal load is applied on each of the friction members from the swingable adjustment mechanism. Pressing the entire sliding surface of the brake disk uniformly as described above may increase stress imposed on bolts provided to fasten the brake disk to the wheel.

An object of the invention is to provide a disk brake device that makes it possible to suppress stress imposed on bolts while suppressing a local temperature rise in the brake disk.

SOLUTION TO PROBLEM

A disk brake device of an embodiment applies a brake on a wheel attached to an axle. The disk brake device includes a brake disk, a brake lining, and a brake caliper. The brake disk has a plurality of bolt holes arranged on a sliding surface and on a same circle. The brake disk is fastened to the wheel by bolts inserted in the respective bolt holes. The brake lining faces the brake disk. The brake lining includes a friction member and a base plate for supporting the friction member. The brake caliper applies a load on a rear face of the base plate to press the friction member against the sliding surface. The rear face of the base plate is divided into an inner area and an outer area along an arcuate boundary centered at an axial center of the axle. When the plurality of bolt holes are projected onto the rear face of the base plate in a direction of the axle, the boundary passes through areas of the projected bolt holes. The brake caliper includes an inner pressing surface that applies a load on the inner area and an outer pressing surface that applies a load on the outer area. The load applied on the inner area from the inner pressing surface is different from the load applied on the outer area from the outer pressing surface.

ADVANTAGEOUS EFFECTS OF INVENTION

The disk brake device according to the present invention makes it possible to suppress stress imposed on bolts while suppressing a local temperature rise in the brake disk.

BRIEF DESCRIPTION OF DRAWINGS

FIG. 1 is a front view of a disk brake device of a first embodiment as viewed from the direction of an axle.

FIG. 2 is a sectional view taken along a II-II line in FIG. 1.

FIG. 3 is a perspective view of a brake lining.

FIG. 4 is a front view of the brake lining and a brake caliper as viewed from the direction of the axle.

FIG. 5 illustrates a rear face, an inner pressing surface, and an outer pressing surface of the brake lining.

FIG. 6 is a sectional view of a disk brake device of a second embodiment.

FIG. 7 is a perspective view of a brake lining and a brake caliper.

FIG. 8 is a front view of the brake caliper as viewed from the direction of an axle.

FIG. 9 is a sectional view of a brake lining and a brake caliper of a third embodiment.

FIG. 10 is a front view of an FEM analysis model of Example 1.

FIG. 11 is a sectional view taken along a XI-XI line in FIG. 10.

FIG. 12 illustrates heat input distribution to a brake disk for the test numbers 1 to 4.

FIG. 13 illustrates heat input distribution to a brake disk for the test numbers 5 to 9.

FIG. 14 illustrates relative values of bolt safety factors with respect to the test number 9.

FIG. 15 is a sectional view of an FEM analysis model of Example 2.

FIG. 16 illustrates heat input distribution to a brake disk for the test numbers 10 to 12 and 17.

FIG. 17 illustrates heat input distribution to a brake disk for the test numbers 13 and 14.

FIG. 18 illustrates heat input distribution to a brake disk for the test numbers 15 and 16.

FIG. 19 illustrates relative values of bolt safety factors with respect to the test number 17.

DESCRIPTION OF EMBODIMENTS

(1) A disk brake device of an embodiment applies a brake on a wheel attached to an axle. The disk brake device includes a brake disk, a brake lining, and a brake caliper. The brake disk has a plurality of bolt holes arranged on a sliding surface and on a same circle. The brake disk is fastened to the wheel by bolts inserted in the respective bolt holes. The brake lining faces the brake disk. The brake lining includes a friction member and a base plate for supporting the friction member. The brake caliper applies a load on a rear face of the base plate to press the friction member against the sliding surface. The rear face of the base plate is divided into an inner area and an outer area along an arcuate boundary centered at an axial center of the axle. When the plurality of bolt holes are projected onto the rear face of the base plate in a direction of the axle, the boundary passes through areas of the projected bolt holes. The brake caliper includes an inner pressing surface that applies a load on the inner area and an outer pressing surface that applies a load on the outer area. The load applied on the inner area from the inner pressing surface is different from the load applied on the outer area from the outer pressing surface.

In the disk brake device of the embodiment, a load is applied on the brake lining from the plurality of pressing surfaces of the brake caliper. As a result, a load applied on the brake lining from one pressing surface is reduced. The maximum value of heat flux applied to the brake disk due to friction between the brake lining and the brake disk is made smaller. In this way, a local temperature rise in the brake disk is to be suppressed.

Further, in the disk brake device of the embodiment, the load applied on the inner area of the brake lining from the inner pressing surface of the brake caliper is different from the load applied on the outer area from the outer pressing surface. Consequently, when the brake lining is pressed against the brake disk, heat input distribution to the brake disk due to friction between the brake lining and the brake disk is non-uniform in a radial direction of the brake disk. As will be described later in Example 1, such non-uniform heat input distribution to the brake disk helps to suppress stress imposed on bolts provided to fasten the brake disk and the wheel.

(2) Preferably, in the disk brake device of the aspect (1), of the load applied on the inner area from the inner pressing surface and the load applied on the outer area from the outer pressing surface, a ratio between the larger load and the smaller load is 1.3 or more to 6.0 or less.

According to the configuration, when the brake lining is pressed against the brake disk, heat input distribution to the brake disk is made non-uniform in the radial direction of the brake disk without a local increase. As a result, stress imposed on bolts is to be further suppressed.

(3) Preferably, in the disk brake device of the aspect (1), of the load applied on the inner area from the inner pressing surface and the load applied on the outer area from the outer pressing surface, a ratio between a width of the inner pressing surface or the outer pressing surface, whichever applies the larger load, in the radial direction of the brake disk and a width of the sliding surface of the brake disk in the radial direction is 0.4 or more, and a ratio between a width of the inner pressing surface or the outer pressing surface, whichever applies the smaller load, in the radial direction of the brake disk and a width of the sliding surface of the brake disk in the radial direction is 0.25 or more.

According to the configuration, the load per unit area applied on the brake lining from the inner pressing surface and the outer pressing surface is small. Consequently, when the brake lining is pressed against the brake disk, the maximum value of heat flux applied to the brake disk due to friction between the brake lining and the brake disk is made smaller. In this way, a local temperature rise in the brake disk is to be suppressed.

The disk brake device described above may employ the following configurations.

(4) In the disk brake device of the aspect (1), the brake caliper includes a plurality of the inner pressing surfaces and a plurality of the outer pressing surfaces. A total load applied on the inner area from the plurality of inner pressing surfaces is different from a total load applied on the outer area from the plurality of outer pressing surfaces.

(5) In the disk brake device of the aspect (1), the brake caliper includes one of the inner pressing surfaces and a plurality of the outer pressing surfaces. A load applied on the inner area from the one inner pressing surface is different from a total load applied on the outer area from the plurality of outer pressing surfaces.

(6) In the disk brake device of the aspect (1), the brake caliper includes a plurality of the inner pressing surfaces and one of the outer pressing surfaces. A total load applied on the inner area from the plurality of inner pressing surfaces is different from a load applied on the outer area from the one outer pressing surface.

(7) In the disk brake device of the aspect (1), the brake caliper includes a pressing plate, an inner member including the inner pressing surface, an outer member including the outer pressing surface, and a pressing surface. The pressing plate faces the rear face of the base plate. The inner member is disposed between the inner area of the base plate and the pressing plate and attached to the inner area of the base plate and the pressing plate. The outer member is disposed between the outer area of the base plate and the pressing plate and attached to the outer area of the base plate and the pressing plate. The pressing surface applies a load on a rear face of the pressing plate. According to the configuration, the load is directly applied on the pressing plate, instead of directly applying the load on the inner and outer members that are in contact with the brake lining. The inner member and the outer member are located between the rear face of the brake lining and the pressing plate. A load is applied on the pressing plate and the load is transmitted to the inner member and the outer member. Consequently, no mechanism is required for directly applying a load on each of the inner and outer members. According to the disk brake device of the embodiment, the number of mechanisms for applying a load can be reduced. This provides a simple structure of the disk brake device. The weight of the disk brake device can be reduced.

(8) Preferably, in the disk brake device of the aspect (7), the inner member and the outer member are springs. A spring constant of the inner member is different from a spring constant of the outer member.

According to the configuration, the spring constant of a spring for applying a load on the inner area on the rear face of the brake lining is different from the spring constant of a spring for applying a load on the outer area. When the pressing plate is displaced in response to a load applied on the pressing plate, displacement of the spring for applying a load on the inner area is substantially equalized to displacement of the spring for applying a load on the outer area. As a result, the load applied on the inner area is likely to be different from the load applied on the outer area.

(9) Preferably, in the disk brake device of the aspect (7) or (8), a distance from a center of the pressing surface to a center of the inner member is different from a distance from the center of the pressing surface to a center of the outer member.

According to the configuration, a load applied on the pressing plate from the pressing surface is likely to be transmitted to the inner member and the outer member in a non-uniform manner. As a result, the load applied on the inner area is likely to be different from the load applied on the outer area.

Embodiments of the present invention will now be described in detail with reference to the drawings. The same or like elements in the drawings are denoted by like reference signs and the description thereof will be omitted.

As used herein, the direction of the axle refers to a direction along an axial center of the axle.

As used herein, an inner sliding area corresponds to a locus drawn on the brake disk by the inner pressing surface when the inner pressing surface is projected onto the brake disk in the direction of the axle. An outer sliding area corresponds to a locus drawn on the brake disk by the outer pressing surface when the outer pressing surface is projected onto the brake disk in the direction of the axle.

As used herein, a gap between the inner pressing surface and the outer pressing surface corresponds to a spacing between the inner sliding area and the outer sliding area in the radial direction of the brake disk.

[First Embodiment]

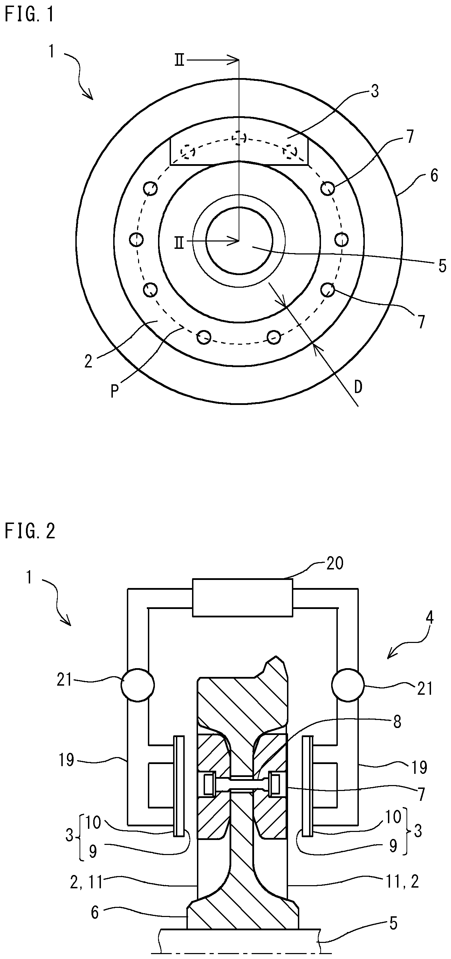

FIG. 1 is a front view of a disk brake device of a first embodiment as viewed from the direction of the axle. FIG. 2 is a sectional view taken along a II-II line in FIG. 1. Referring to FIGS. 1 and 2, a disk brake device 1 includes a brake disk 2, a brake lining 3, and a brake caliper 4. In FIG. 1, the brake caliper is omitted. The disk brake device 1 applies a brake on a wheel 6 attached to an axle 5. Although FIG. 2 illustrates two brake disks 2, two brake linings 3, and two brake calipers 4, they are symmetrical. Accordingly, description will be made hereinafter as to one brake disk 2, one brake lining 3, and one brake caliper 4. The same applies to the second and third embodiments.

[Brake Disk]

The brake disk 2 has a plurality of bolt holes 7. The bolt holes 7 are arranged on a same circle P on the brake disk 2. The center of the circle P coincides with the axial center of the axle 5. The brake disk 2 is fastened to the wheel 6 by bolts 8 inserted in the respective bolt holes 7. The brake disk 2 is thus rotated integrally with the wheel 6.

The brake disk 2 is in a disk shape. The material for the brake disk 2 includes, for example, steel, carbon fiber composite, and the like. In general, 10 to 12 bolt holes are provided. However, the number of bolt holes 7 is not particularly limited. The brake disk 2 has a sliding surface 11.

[Brake Lining]

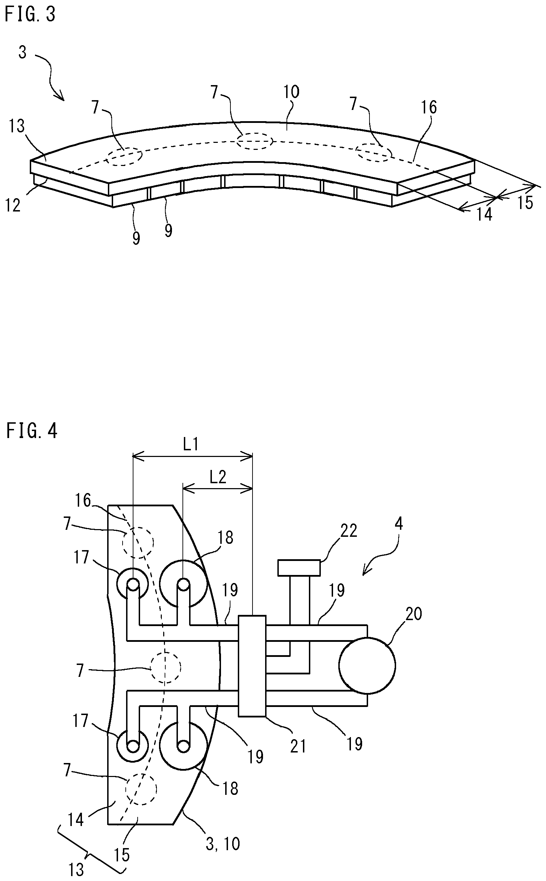

FIG. 3 is a perspective view of a brake lining. Referring to FIGS. 2 and 3, the brake lining 3 includes a friction member 9 and a base plate 10. The base plate 10 supports the friction member 9. The brake lining 3 faces the brake disk 2. Specifically, the friction member 9 faces the sliding surface 11 of the brake disk 2. The brake lining 3 is pressed against the brake disk 2 to apply a brake on the brake disk 2. Since the brake disk 2 is fixed to the wheel 6, the rotation of the wheel 6 is slowed down when the rotation of the brake disk 2 is slowed down.

The base plate 10 has a front face 12 and a rear face 13. A plurality of friction members 9 are attached to the front face 12. Any other components such as a spring element may be located between the base plate 10 and the friction member 9. The material for the friction member 9 includes, for example, a cast iron material, a metallic sintered material, a resin group, and the like. The shape of the friction member 9 is not particularly limited. The friction member 9 is, for example, in a circular or polygonal shape or other shapes. The number of the friction members 9 is not particularly limited. There may be one friction member 9 or more than one friction members 9.

The rear face 13 of the base plate 10 is divided into an inner area 14 and an outer area 15. The inner area 14 and the outer area 15 are divided along a boundary 16. The boundary 16 is in an arc shape centered at the axial center of the axle. A plurality of bolt holes 7 indicated by dashed lines are bolt holes on the brake disk that are projected onto the rear face 13 of the base plate 10 in the direction of the axle.

FIG. 4 is a front view of the brake lining and a brake caliper as viewed from the direction of the axle. Referring to FIGS. 3 and 4, the boundary 16 passes through the projected bolt holes 7.

[Brake Caliper]

Referring to FIGS. 2 and 4, the brake caliper 4 includes an inner pressing surface 17 and an outer pressing surface 18. The inner pressing surface 17 and the outer pressing surface 18 face the rear face 13 of the base plate 10. The inner pressing surface 17 applies a load on the inner area 14. The outer pressing surface 18 applies a load on the outer area 15. Specifically, during braking of the wheel, the inner pressing surface 17 applies a load on the inner area 14 and the outer pressing surface 18 applies a load on the outer area 15.

One brake lining 3 is provided with two arms 19. A distal end of each of the arms 19 is divided in two. Each of the divided distal ends of the arm 19 supports an inner pressing member and an outer pressing member. The inner pressing member includes the inner pressing surface 17 and the outer pressing member includes the outer pressing surface 18. Further, the arm 19 is connected to a brake cylinder 20. The brake cylinder 20 is, for example, an air cylinder, a hydraulic cylinder, and the like. The arm 19 includes a fulcrum 21. When the brake cylinder 20 is actuated during braking, the arm 19 is rotated about the fulcrum 21. The brake lining is then pressed against the brake disk, and the inner pressing surface 17 can apply a load on the inner area 14 and the outer pressing surface 18 can apply a load on the outer area 15. According to the configuration, the brake lining 3 can also be disengaged from the brake disk. A bracket 22 is attached to the fulcrum 21. The bracket 22 is fixed to a bogie of the railway vehicle.

The load applied on the inner area 14 from the inner pressing surface 17 is different from the load applied on the outer area 15 from the outer pressing surface 18. To modify the load applied on the inner area 14, a length L1 from the fulcrum 21 to the inner pressing surface 17 may be adjusted. To modify the load applied on the outer area 15, a length L2 from the fulcrum 21 to the outer pressing surface 18 may be adjusted. In this way, even when the inner pressing surface 17 and the outer pressing surface 18 are supported by the same arm 19, the load applied on the inner area 14 and the load applied on the outer area 15 can be adjusted.

[Ratio between Load Applied on Inner Area and Load Applied on Outer Area]

Here, the load applied on the inner area 14 from the inner pressing surface 17 is defined as P1, and the load applied on the outer area 15 from the outer pressing surface 18 is defined as P2. Of the load P1 and the load P2, a ratio PL/PS between the larger load PL and the smaller load PS is preferably 1.3 or more to 6.0 or less. For example, when P1>P2, PL/PS = P1/P2. Consequently, stress imposed on bolts is to be further suppressed, as shown in Example 1, which will be described later.

If PL/PS is less than 1.3, heat input distribution to the brake disk is nearly uniform in the radial direction of the brake disk. Accordingly, the lower limit of PL/PS is preferably 1.3. However, PL/PS may be less than 1.3 as long as PL/PS is larger than 1.0. This is because heat input distribution to the brake disk is non-uniform when PL/PS is larger than 1.0.

If PL/PS is larger than 6.0, heat input distribution to the brake disk 2 is locally increased in the radial direction of the brake disk 2. As a result, the maximum value of heat flux applied to the brake disk is increased. Accordingly, the upper limit of PL/PS is preferably 6.0. However, PL/PS may be larger than 6.0 unless only one of the inner area 14 and the outer area 15 is loaded. This is because the maximum value of heat flux applied to the brake disk is suppressed when both the inner area 14 and the outer area 15 are loaded, as compared to the case in which only one of them is loaded.

[Width of Inner Pressing Surface and Outer Pressing Surface]

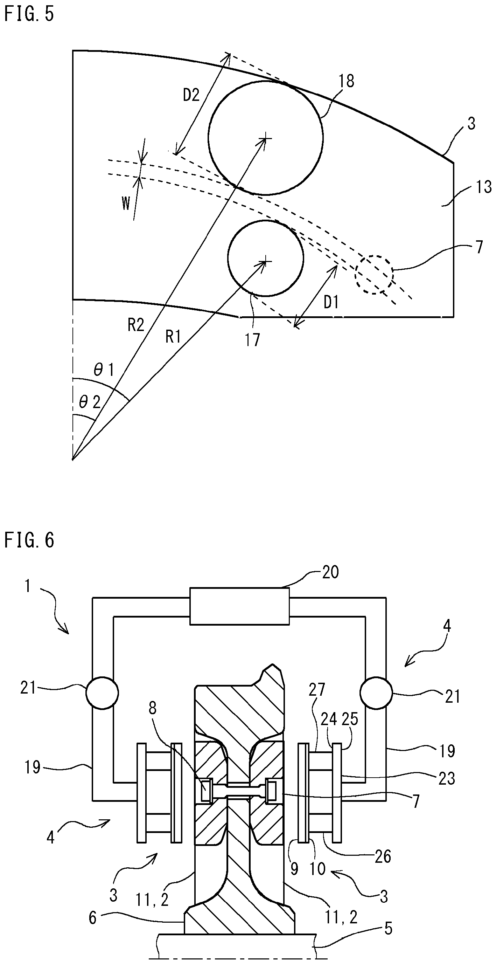

FIG. 5 illustrates a rear face, an inner pressing surface, and an outer pressing surface of the brake lining. Referring to FIG. 5, here the width of the inner pressing surface 17 is defined as D1, and the width of the outer pressing surface 18 is defined as D2. Of the loads P1 and P2, a ratio DL/D between a width DL of one of the pressing surfaces (inner pressing surface 17 or outer pressing surface 18), whichever applies the larger load PL, in the radial direction of the brake disk and a width D (see FIG. 1) of the sliding surface in the radial direction of the brake disk is preferably 0.4 or more. Further, a ratio DS/D between a width DS of one of the pressing surfaces (inner pressing surface 17 or outer pressing surface 18), whichever applies the smaller load PS, in the radial direction of the brake disk and a width D of the sliding surface in the radial direction of the brake disk is preferably 0.25 or more. For example, when P1>P2, DL/D = D1/D and D1/D is 0.4 or more. Consequently, stress imposed on bolts is to be further suppressed, as shown in Example 1, which will be described later.

If DL/D is less than 0.4, a load per unit area applied on the brake lining 3 from the inner pressing surface 17 or the outer pressing surface 18 is large. When the brake lining 3 is pressed against the brake disk, heat flux applied to the brake disk due to friction between the brake lining 3 and the brake disk is locally increased. Because of this, a partial wear of the brake disk and heat spots are likely to occur. Accordingly, the lower limit of DL/D is preferably 0.4.

If DS/D is less than 0.25, a partial wear of the brake disk and heat spots are also likely to occur, as with the case described above. Accordingly, the lower limit of DS/D is preferably 0.25.

[Gap between Inner Pressing Surface and Outer Pressing Surface]

A gap W between the inner pressing surface 17 and the outer pressing surface 18 is preferably 0 or more. If the gap W between the inner pressing surface 17 and the outer pressing surface 18 is less than 0, the amount of heat input near the bolt hole 7 on the brake disk is likely to increase. In other words, heat input distribution to the brake disk is hardly non-uniform or heat is likely to be input locally near the bolt hole 7. Accordingly, the lower limit of the gap W between the inner pressing surface 17 and the outer pressing surface 18 is preferably 0. Further, the gap W between the inner pressing surface 17 and the outer pressing surface 18 is preferably 10 (mm) or more. Consequently, stress imposed on bolts is to be further suppressed, as shown in Example 1, which will be described later.

As described above, in the disk brake device of the first embodiment, the plurality of pressing surfaces of the brake caliper apply a load on a brake lining. As a result, a load applied on the brake lining from one pressing surface is reduced. The maximum value of heat flux applied to the brake disk due to friction between the brake lining and the brake disk is made smaller. In this way, a local temperature rise in the brake disk is to be suppressed.

Further, in the disk brake device of the first embodiment, the load applied on the inner area of the brake lining from the inner pressing surface of the brake caliper is different from the load applied on the outer area from the outer pressing surface. Consequently, when the brake lining is pressed against the brake disk, heat input distribution to the brake disk due to friction between the brake lining and the brake disk is non-uniform in the radial direction of the brake disk. As will be described later in Example 1, such non-uniform heat input distribution to the brake disk helps to suppress stress imposed on bolts provided to fasten the brake disk and the wheel.

The embodiment of the present invention is not limited to the first embodiment. A disk brake device of a second embodiment will now be described.

[Second Embodiment]

FIG. 6 is a sectional view of a disk brake device of a second embodiment. Referring to FIG. 6, the disk brake device of the second embodiment is different from the first embodiment in that the brake caliper 4 includes a pressing plate 23. It is to be noted that, in the second embodiment, description of the same configurations as the first embodiment will be omitted.

[Brake Caliper]

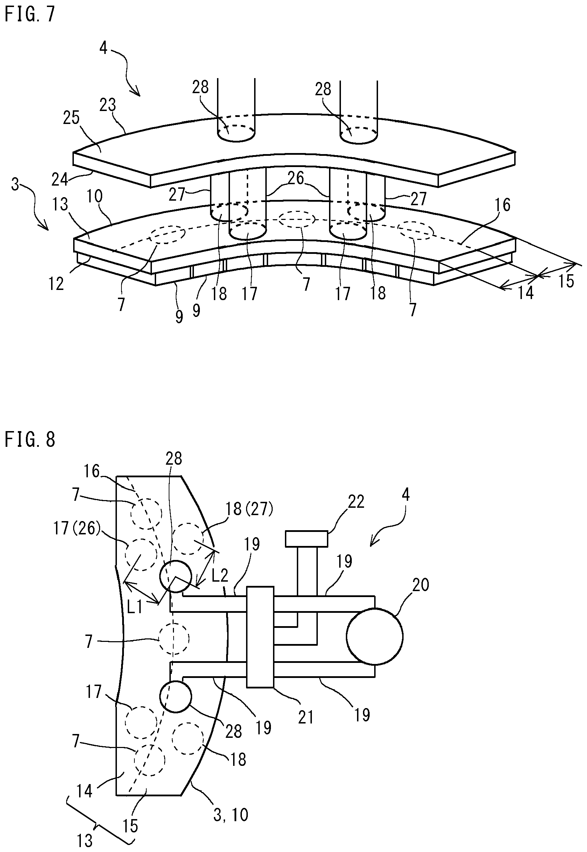

FIG. 7 is a perspective view of a brake lining and a brake caliper. FIG. 8 is a front view of the brake caliper as viewed from the direction of the axle. Referring to FIGS. 7 and 8, the brake caliper 4 includes a pressing plate 23, an inner member 26, an outer member 27, and a pressing surface 28. The pressing plate 23 includes a front face 24 and a rear face 25. The front face 24 of the pressing plate 23 faces the rear face 13 of the base plate 10.

The inner member 26 is disposed between the inner area 14 of the base plate 10 and the front face 24 of the pressing plate 23. The inner member 26 is disposed inside from the outer member 27 in the radial direction of the brake disk. The inner member 26 includes the inner pressing surface 17. The inner member 26 is attached to the inner area 14 of the base plate 10 and the pressing plate 23. Specifically, the inner pressing surface 17 is attached to the inner area 14 of the base plate 10. An end face opposite to the inner pressing surface 17 of the inner member 26 is attached to the front face 24 of the pressing plate 23. The inner member 26 is, for example, a spring, a rubber, or a metal cylinder.

The outer member 27 is disposed between the outer area 15 of the base plate 10 and the front face 24 of the pressing plate 23. The outer member 27 includes an outer pressing surface 18. The outer member 27 is attached to the outer area 15 of the base plate 10 and the pressing plate 23. Specifically, the outer pressing surface 18 is attached to the outer area 15 of the base plate 10. An end face opposite to the outer pressing surface 18 of the outer member 27 is attached to the front face 24 of the pressing plate 23. The outer member 27 is, for example, a spring, a rubber, a metal cylinder.

The pressing surface 28 applies a load on the rear face 25 of the pressing plate 23. Since the inner member 26 and the outer member 27 are attached to the pressing plate 23, the load applied on the pressing plate 23 from the pressing surface 28 is transmitted to the inner member 26 and the outer member 27. Since the inner member 26 and the outer member 27 are also attached to the base plate 10, the load transmitted to the inner member 26 and the outer member 27 is applied on the base plate 10.

With the configuration, the inner pressing surface 17 can apply a load on the inner area 14. The outer pressing surface 18 can apply a load on the outer area 15. Specifically, during braking of the wheel, the inner pressing surface 17 can apply a load on the inner area 14 and the outer pressing surface 18 can apply a load on the outer area 15.

One brake lining 3 is provided with two arms 19. A distal end of the arm 19 supports a pressing member. The pressing member includes the pressing surface 28. During braking, the pressing surface 28 applies a load on the pressing plate 23 in the direction toward the brake lining 3. The arm 19 is connected to the brake cylinder 20. When the brake cylinder 20 is actuated during braking, the arm 19 is rotated about the fulcrum 21. The brake lining 3 is then pressed against the brake disk 2, and the inner pressing surface 17 can apply a load on the inner area 14 and the outer pressing surface 18 can apply a load on the outer area 15. According to the configuration, the brake lining 3 can also be disengaged from the brake disk 2.

Description will now be made as to a disk brake device in which the inner member 26 and the outer member 27 are not located between the base plate 10 and the pressing plate 23. In this case, in order to apply a load on each of the inner member 26 and the outer member 27, other mechanisms such as a brake cylinder and an arm are additionally required, which apply a load on each of the inner member 26 and the outer member 27. In other words, the same number of mechanisms for directly applying a load on the brake lining 3 as the number of members that are in direct contact with the brake lining 3 may be required.

However, in the disk brake device 1 of the second embodiment, the inner member 26 and the outer member 27, which apply a load on the base plate 10 of the brake lining 3, are located between the base plate 10 and the pressing plate 23. A load is applied on the pressing plate 23 and the load is transmitted to the inner member 26 and the outer member 27. Then, no mechanism is required for applying a load on each of the inner member 26 and the outer member 27. When a load is applied on the pressing plate 23, the load is dispersedly applied on the inner member 26 and the outer member 27. Therefore, according to the disk brake device of the second embodiment, the number of mechanisms for applying a load can be reduced. This provides a simple structure of the disk brake device. The weight of the disk brake device can be reduced.

In the disk brake device of the second embodiment, as with the first embodiment, the load applied on the inner area 14 from the inner pressing surface 17 of the inner member 26 is different from the load applied on the outer area 15 from the outer pressing surface 18 of the outer member 27. One approach for making the load applied on the inner area 14 and the load applied on the outer area 15 different from each other in the disk brake device of the second embodiment is as follows.

Description will now be made as to the case in which the inner member 26 and the outer member 27 are springs. Although the type of spring is not particularly limited, the inner member 26 and the outer member 27 are preferably belleville washers. The reason is that this helps to keep a gap small between the brake lining 3 and the pressing plate 23. When a load is applied on the pressing plate 23 during braking, the pressing plate 23 is displaced toward the brake lining 3. The inner member 26 and the outer member 27 are located between the pressing plate 23 and the base plate 10. As a result, when the pressing plate 23 is displaced, the inner member 26 and the outer member 27 are also displaced. Here, the spring constant of the spring constituting the inner member 26 is different from the spring constant of the spring constituting the outer member 27. Accordingly, when the displacement of the inner member 26 is the same as the displacement of the outer member 27, the load applied on the inner area 14 from the inner pressing surface 17 of the inner member 26 is different from the load applied on the outer area from the outer pressing surface 18 of the outer member 27. Further, when the spring constant of the inner member 26 is different from the spring constant of the outer member 27 even when the displacement of the inner member 26 is different from the displacement of the outer member 27, the load applied on the inner area 14 is practically less likely to be the same as the load applied on the outer area 15.

Another approach for making the load applied on the inner area 14 and the load applied on the outer area 15 different from each other is as follows.

Referring to FIG. 8, a distance L1 from the center of the pressing surface 28 to the center of the inner member 26 is different from a distance L2 from the center of the pressing surface 28 to the center of the outer member 27. In this case, the inner member 26 and the outer member 27 may or may not be springs. The inner member 26 and the outer member 27 are, for example, springs, rubbers, metal cylinders, or the like.

As described above, during braking, a load is applied on the rear face 25 of the pressing plate 23 from the pressing surface 28 in the direction toward the brake lining. The load is dispersedly transmitted to the inner member 26 and the outer member 27. When the distance L1 from the center of the pressing surface 28 to the center of the inner member 26 is different from the distance L2 from the center of the pressing surface 28 to the center of the outer member 27, the load applied on the inner member 26 is made different from the load applied on the outer member 27 in order to balance the moment of the pressing plate 23. Accordingly, the load applied on the inner area 14 of the brake lining 3 is different from the load applied on the outer area 15.

The center of the pressing surface 28 refers to a point on which a concentrated load is acted when the concentrated load is substituted for a distributed load applied on the pressing plate 23 from the pressing surface 28. The center of the inner member 26 refers to a point on which a concentrated load is acted when the concentrated load is substituted for a distributed load applied on the brake lining 3 from the inner pressing surface 17. The same applies to the center of the outer member 27.

Hereinbefore, approaches for making the load applied on the inner area 14 and the load applied on the outer area 15 different from each other have been described. However, the disk brake device of the second embodiment is not limited to the specific cases. As long as the load applied on the inner area 14 of the brake lining 3 is different from the load applied on the outer area 15, the configuration may not be particularly limited. When the load applied on the inner area 14 is different from the load applied on the outer area 15, heat input distribution to the brake disk is non-uniform, as will be described later in Example 1. As a result, stress imposed on bolts provided to fasten the brake disk and the wheel is to be suppressed.

[Ratio between Spring Constant of Inner Member and Spring Constant of Outer Member]

In the case in which the inner member and the outer member are springs, a ratio $K1/K2$ between a spring constant $K1$ of the inner member and a spring constant $K2$ of the outer member is preferably 0.5 or more to 3 or less. However, the case in which $K1/K2 = 1$ is excluded. As will be described later in Example 2, when $K1/K2$ is 0.5 or more to 3 or less (1 is excluded), heat input distribution to the brake disk is non-uniform and thereby stress imposed on bolts can be suppressed.

As described above, in the disk brake device of the second embodiment, a local temperature rise in the brake disk is to be suppressed. Further, heat input distribution to the brake disk due to friction between the brake lining and the brake disk is non-uniform. As a result, stress imposed on bolts provided to fasten the brake disk and the wheel is to be suppressed. Further, in the disk brake device of the second embodiment, the load is directly applied on the pressing plate, instead of directly applying the load on the inner and outer members that are in contact with the brake lining. The inner member and the outer member are located between the rear face of the brake lining and the pressing plate. A load is applied on the pressing plate and the force is transmitted to the inner member and the outer member. Accordingly, no mechanism is required for applying a load on each of the inner member and the outer member. According to the disk brake device of the second embodiment, the number of mechanisms for applying a load can be reduced. This provides a simple structure of the disk brake device. The weight of the disk brake device can be reduced.

Next, a disk brake device of a third embodiment will be described.

[Third Embodiment]

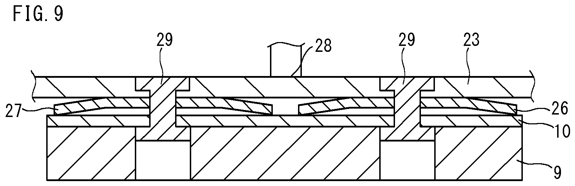

FIG. 9 is a sectional view of a brake lining and a brake caliper of a third embodiment. FIG. 9 illustrates a section taken along the radial direction of the brake disk. Referring to FIG. 9, a fundamental configuration of the disk brake device of the third embodiment is the same as the configuration of the disk brake device of the second embodiment. However, the disk brake device of the third embodiment is different from the second embodiment in that the pressing plate 23 and the base plate 10 are connected to each other by a rivet 29. It is to be noted that, in the third embodiment, description of the same configurations as the second embodiment will be omitted.

FIG. 9 illustrates the case in which the inner member 26 and the outer member 27 are belleville washers. The brake lining includes the friction member 9 and the base plate 10. The brake caliper includes the pressing plate 23, the inner member 26, the outer member 27, and the pressing surface 28. In general, a member denoted by a reference sign 10 may be referred to as a "back metal" and a member denoted by a reference sign 23 may be referred to as a "base plate". As used herein, however, the member denoted by a reference sign 10 is referred to as a "base plate" and the member denoted by a reference sign 23 is referred to as a "pressing plate".

The inner member 26 and the outer member 27 are disposed between the pressing plate 23 and the base plate 10. The pressing plate 23 and the base plate 10 are connected to each other by the rivet 29. The connection by the rivet 29 allows the pressing plate 23 to come close to the base plate 10 along an axial direction of the rivet 29. Consequently, when a load is applied on the rear face of the pressing plate 23 from the pressing surface 28, the load is applied on the rear face of the base plate 10.

In this configuration, a local temperature rise in the brake disk is also to be suppressed, as with the embodiments described above. Further, heat input distribution to the brake disk can be non-uniform, and thereby stress imposed on bolts provided to fasten the brake disk and the wheel is to be suppressed. Further, a simple structure of the disk brake device can be provided.

[Example 1]

In Example 1, assuming the disk brake device of the first embodiment described above, a study has been made on heat input distribution to the brake disk and stress imposed on bolts in the case in which the load applied on the inner area is different from the load applied on the outer area. As a result, it has been found that when the load applied on the inner area is different from the load applied on the outer area, heat input distribution to the brake disk is non-uniform and thereby stress imposed on bolts is suppressed. Detailed description is as follows.

The present inventors studied a relation between heat input distribution to the brake disk and stress imposed on bolts. Specifically, the inventors conducted tests as shown in the following test numbers 1 to 9 through FEM (Finite Element Method) analysis. Tests were conducted in the test numbers 1 to 7 as inventive examples and the test numbers 8 and 9 as comparative examples.

[Test Conditions]

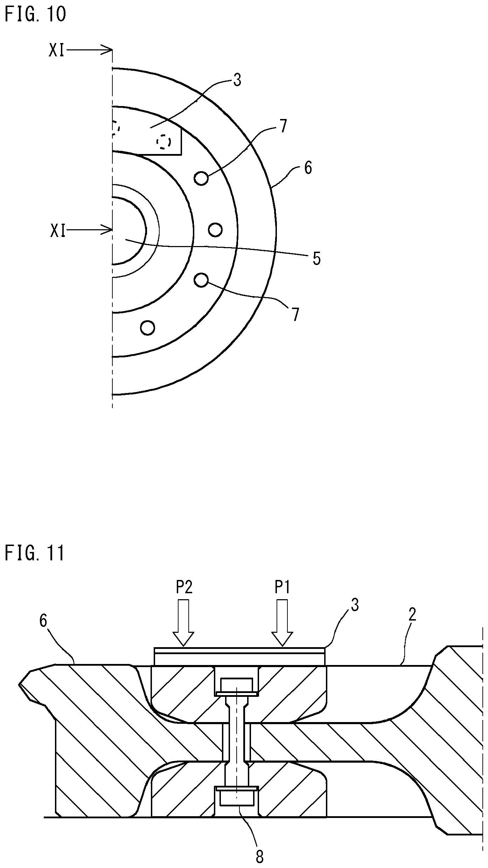

FIG. 10 is a front view of an FEM analysis model of Example 1. FIG. 11 is a sectional view taken along a XI-XI line in FIG. 10. Referring to FIGS. 10 and 11, in the FEM analysis model, a wheel having the disk brake device attached thereto is assumed. The disk brake device and the wheel were set to be symmetrical. Calculation was made on a half area of the disk brake device and the wheel. The inner radius of the brake disk was 235 mm. The outer radius of the brake disk was 360 mm. In other words, the width of the sliding surface of the brake disk in the radial direction of the brake disk was 125 mm. The bolt holes were provided on the center of the width of the sliding surface of the brake disk. Further, the diameter of the wheel was 860 mm. The peripheral speed of a tread of the wheel was 300 km/h. A total load applied on the rear face of the base plate of the brake lining was 13.6 kN.

[Table 1]

TABLE 1

|  | R1 (mm) | R2 (mm) | D1 (mm) | D2 (mm) | W (mm) | P1 (kN) | P2 (kN) | N1 | N2 |
|---|---|---|---|---|---|---|---|---|---|
| Test Number 1 | 270 | 330 | 60 | 40 | 10 | 10.2 | 3.4 | 2 | 2 |
| Test Number 2 | 270 | 330 | 40 | 60 | 10 | 5.2 | 8.4 | 2 | 2 |
| Test Number 3 | 270 | 330 | 40 | 60 | 10 | 5.2 | 8.4 | 2 | 1 |
| Test Number 4 | 280 | 330 | 40 | 60 | 0 | 5.2 | 8.4 | 2 | 2 |
| Test Number 5 | 270 | 330 | 40 | 60 | 10 | 6.0 | 7.6 | 2 | 2 |
| Test Number 6 | 270 | 330 | 40 | 60 | 10 | 3.0 | 10.6 | 2 | 2 |
| Test Number 7 | 270 | 330 | 40 | 60 | 10 | 2.2 | 11.4 | 2 | 2 |
| Test Number 8 | 267 | 329 | 30 | 30 | 32 | 6.8 | 6.8 | 8 | 8 |
| Test Number 9 | 297 | - | 40 | - | - | 13.6 | - | 2 | - |

Table 1 shows the test conditions. Each of parameters will be described with reference to FIG. 5. In Table 1, "R1 (mm)" indicates the radius to the center of the inner sliding area. "R2 (mm)" indicates the radius to the center of the outer sliding area. "D1 (mm)" indicates the width of the inner sliding area. "D2 (mm)" indicates the width of the outer sliding area. "W (mm)" indicates the gap between the inner pressing surface and the outer pressing surface. In other words, "W (mm)" corresponds to the gap between the inner sliding area and the outer sliding area. "PI (kN)" indicates the load applied on the inner area. "P2 (kN)" indicates the load applied on the outer area. "N1" indicates the number of the inner pressing surfaces. "N2" indicates the number of the outer pressing surfaces.

The load P1 applied on the inner area indicates a total load applied on all the inner pressing surfaces. For example, in the test number 1, the load P1 applied on the inner area was 10.2 kN. Further, in the test number 1, there are two inner pressing surfaces. Accordingly, the load P1 applied on the inner area indicates the total load applied on the two inner pressing surfaces. The same applies to other test numbers. Further, the same applies to the load P2 applied on the outer area.

In the test numbers 1 to 7, the brake lining was loaded from a plurality of points. Further, the load applied on the inner area of the brake lining was different from the load applied on the outer area. In the test number 8, the load applied on the inner area was equal to the load applied on the outer area. In the test number 9, the brake lining was loaded from one point.

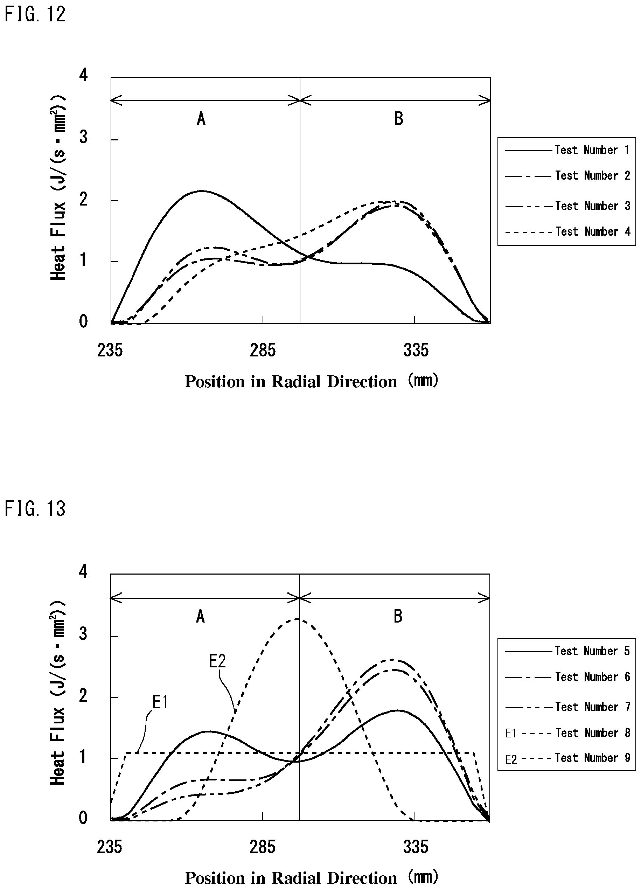

FIG. 12 illustrates heat input distribution to a brake disk for the test numbers 1 to 4. In FIG. 12, a solid line, a long dashed short dashed line, a long dashed double-short dashed line, and a dashed line indicate the results of the test number 1, the test number 2, the test number 3, and the test number 4, respectively.

FIG. 13 illustrates heat input distribution to a brake disk for the test numbers 5 to 9. In FIG. 13, a solid line, a long dashed short dashed line, a long dashed double-short dashed line, a dashed line E1, and a dashed line E2 indicate the results of the test number 5, the test number 6, the test number 7, the test number 8, and the test number 9, respectively.

Referring to FIGS. 12 and 13, the ordinate indicates the heat flux $J/(s \cdot mm^2)$, and the abscissa indicates a position in the radial direction on the sliding surface of the brake disk. The position in the radial direction represents a direction from the axial center of the axle to any arbitrary position on the sliding surface in the radial direction of the brake disk. In FIGS. 12 and 13, the character "A" denotes an area (inner area) ranging from 235 to 297.5 mm in the radial direction on the sliding surface, and the character "B" denotes an area (outer area) ranging from 297.5 to 360 mm.

The maximum values of heat flux of the test numbers 1 to 7 (inventive example) were smaller than the maximum value of heat flux of the test number 9 (comparative example). This is because a load applied on the brake lining by one pressing surface in the test numbers 1 to 7 was smaller than that in the test number 9. Accordingly, in the test numbers 1 to 7, a local temperature rise in the brake disk was suppressed.

Further, in the test numbers 1 to 7, heat flux in the area A of the brake disk was different from heat flux in the area B. In other words, in the test numbers 1 to 7, heat input distribution to the brake disk was non-uniform in the radial direction of the brake disk. This is because, in the test numbers 1 to 7, the load applied on the inner area of the brake lining was different from the load applied on the outer area. Accordingly, in the test numbers 1 to 7, stress imposed on bolts provided to fasten the brake disk and the wheel was suppressed. Detailed description will be made as to this point.

The present inventors simulated deformation of the brake disk by the FEM analysis. In the FEM analysis, a load applied on a bolt by deformation of the brake disk due to thermal stress was taken into consideration. From a result of the FEM analysis, stress imposed on a bolt was calculated for each test number. From the calculated stress, a bolt safety factor was calculated for each test number. Here, the bolt safety factor was calculated in the following formula:

$$(\text{bolt safety factor}) = (\text{allowable stress of bolt}) \, / \, (\text{stress imposed on bolt calculated by FEM analysis})$$

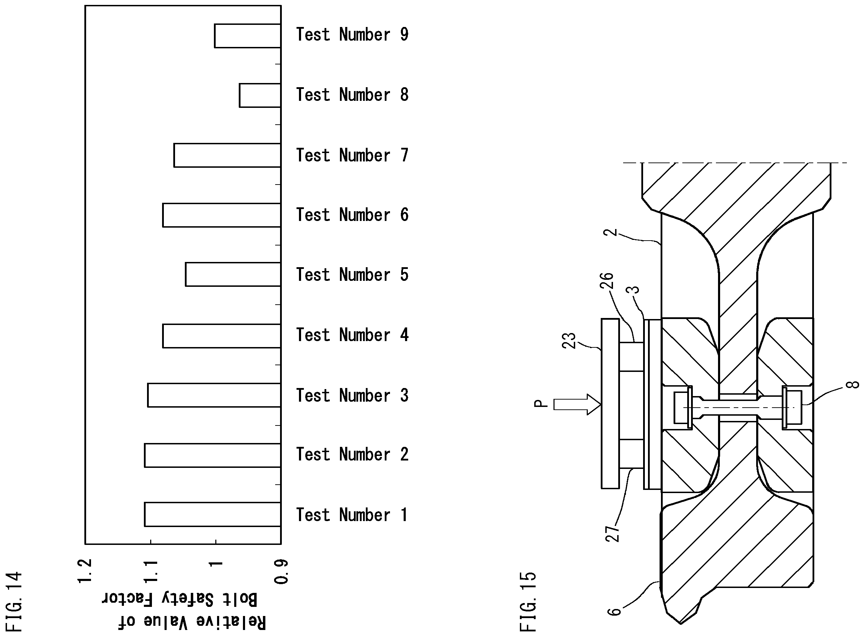

FIG. 14 illustrates relative values of bolt safety factors with respect to the test number 9. Referring to FIG. 14, the bolt safety factors in the test numbers 1 to 7 were higher than the bolt safety factors in the test numbers 8 and 9. In other words, in the test numbers 1 to 7, stress imposed on bolts was suppressed. In short, the present inventors have found by the FEM analysis that when heat input distribution to the brake disk is non-uniform in the radial direction of the brake disk, stress imposed on bolts is suppressed as compared to the case of uniform heat input distribution.

[Example 2]

In Example 2, assuming the disk brake device of the second embodiment described above, a study has been made on heat input distribution to the brake disk. As a result, it has been found that heat input distribution to the brake disk is non-uniform and thereby stress imposed on bolts is suppressed based on the results of Example 1. Detailed description is as follows.

The present inventors have studied heat input distribution to the brake disk in the case of the disk brake device of the second embodiment. Specifically, tests were conducted in the following test numbers 10 to 17 by the FEM analysis. The tests were conducted in the test numbers 10 to 16 as inventive examples and the test number 17 as a comparative example.

[Test Conditions]

FIG. 15 is a sectional view of an FEM analysis model of Example 2. Referring to FIG. 15, Example 2 was different from Example 1 in terms of the configuration of the brake caliper. Specifically, the configuration of the brake caliper illustrated in FIG. 6 was assumed in Example 2. A total load applied on the rear face of the pressing plate was 13.6 kN. The inner member 26 and the outer member 27 were assumed to be belleville washers. The center of the pressing surface for applying a load on the pressing plate 23 was at a distance of 297.5 mm from the center of the brake disk, the position being inclined by 20° from a center line of the brake disk. The center line of the brake disk refers to a line passing through both the center of the brake disk and the center of a longitudinal direction of the brake lining. The center of the inner member was at a distance of 266.25 mm from the center of the brake disk. The center of the outer member was at a distance of 328.75 mm from the center of the brake disk. Other test conditions were the same as those in Example 1.

[Table 2]

TABLE 2

|  | K1/K2 | θ1 (deg) | θ2 (deg) | D1 (mm) | D2 (mm) |
|---|---|---|---|---|---|
| Test Number 10 | 2 | 20 | 20 | 60 | 60 |
| Test Number 11 | 3 | 20 | 20 | 60 | 60 |
| Test Number 12 | 0.5 | 20 | 20 | 60 | 60 |
| Test Number 13 | 1 | 30 | 20 | 60 | 60 |
| Test Number 14 | 1 | 20 | 10 | 60 | 60 |
| Test Number 15 | 1 | 20 | 20 | 40 | 60 |
| Test Number 16 | 1 | 20 | 20 | 60 | 40 |
| Test Number 17 | 1 | 20 | 20 | 60 | 60 |

Table 2 shows the test conditions. Each of parameters in Table 2 will be described with reference to FIG. 5. In Table 2, "K1" indicates the spring constant of the inner member. "K2" indicates the spring constant of the outer member. In other words, "K1/K2" indicates the ratio between the spring constant of the inner member and the spring constant of the outer member. "θ1" indicates the angle between the radius of the brake disk passing through the center of the inner member and the center line of the brake disk. "θ2" indicates the angle between the radius of the brake disk passing through the center of the outer member and the center line of the brake disk. Other parameters are similar to those in Example 1.

In the test numbers 10 to 12, which are inventive examples, "K1/K2" was not 1. In other words, the spring constant of the inner member was different from the spring constant of the outer member. In the test number 13, which is an inventive example, "θ2" is 20°, and the center of the outer member lies on a line (radius of the brake disk) passing through the center of the pressing surface and the center of the brake disk. Accordingly, the distance from the center of the pressing surface to the center of the outer member is equal to the distance between the center of the pressing surface and the center of the outer member in the radial direction of the brake disk, which was 31.25 mm. In the test number 13, since "θ1" is 30°, the center of the inner member did not lie on the radius of the brake disk passing through the center of the pressing surface. Accordingly, the distance from the center of the pressing surface to the center of the inner member was larger than the distance between the center of the inner member and the center of the pressing surface in the radial direction of the brake disk, which was 31.25 mm. Similarly, in the test number 14, which is an inventive example, since "θ2" was 10° while "θ1" was 20°, the distance from the center of the pressing surface to the center of the inner member was different from the distance from the center of the pressing surface to the center of the outer member. In the test numbers 15 and 16, which are inventive examples, "D1" and "D2" were different. In the embodiment, the inner member and the outer member are belleville washers. Accordingly, "D1" corresponds to the diameter of the belleville washer constituting the inner member and "D2" corresponds to the diameter of the belleville washer constituting the outer member. Belleville washers having different diameters have different spring constants. In other words, in the test numbers 15 and 16, the spring constant of the inner member and the spring constant of the outer member were different from each other.

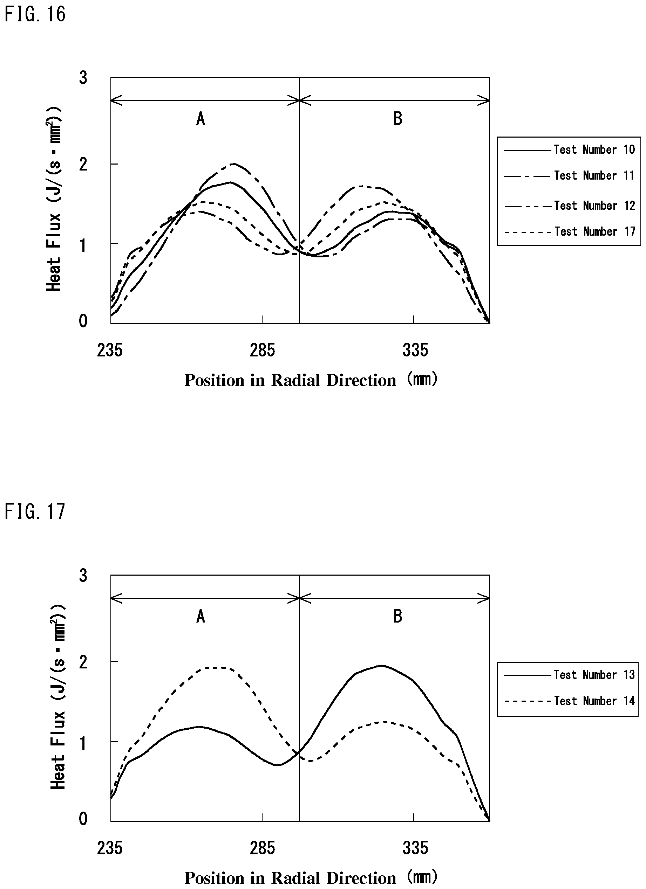

FIG. 16 illustrates heat input distribution to a brake disk for the test numbers 10 to 12 and 17. In FIG. 16, a solid line, a long dashed short dashed line, a long dashed double-short dashed line, and a dashed line indicate the results of the test number 10, the test number 11, the test number 12, and the test number 17, respectively.

FIG. 17 illustrates heat input distribution to a brake disk for the test numbers 13 and 14. In FIG. 17, a solid line and a dashed line indicate the results of the test number 13 and the test number 14, respectively.

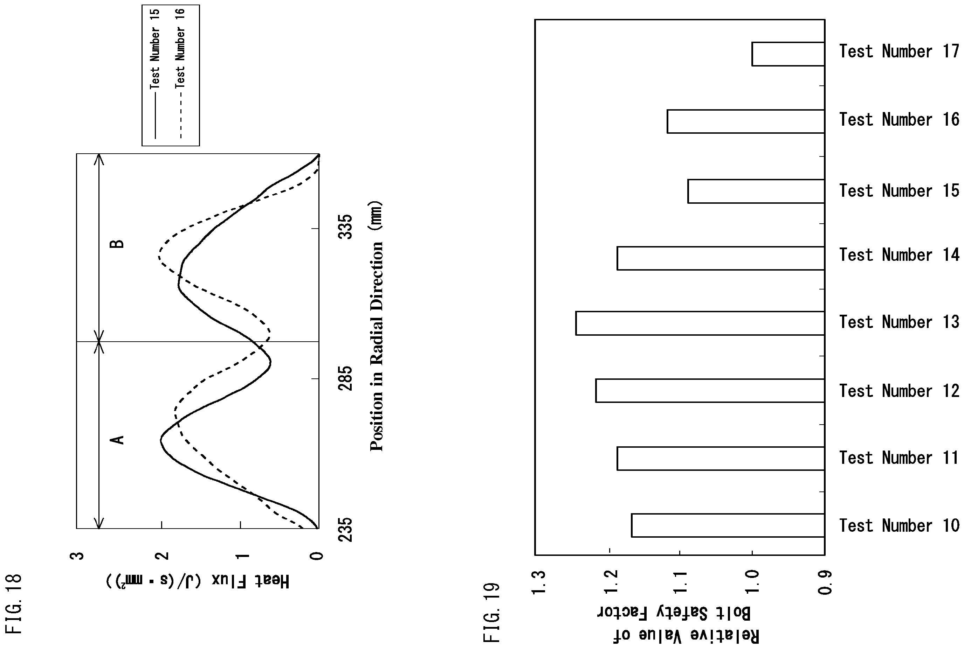

FIG. 18 illustrates heat input distribution to a brake disk for the test numbers 15 and 16. In FIG. 18, a solid line and a dashed line indicate the results of the test number 15 and the test number 16, respectively.

In FIGS. 16 to 18, the ordinate indicates the heat flux J/(s·mm$^2$), and the abscissa indicates a position (mm) in the radial direction on the sliding surface of the brake disk.

Referring to FIG 16, in the test number 17, which is a comparative example, the maximum value of heat flux in the area A was equal to the maximum value of heat flux in the area B. This is because in the test number 17, the spring constant K1 of the inner member was the same as the spring constant K2 of the outer member. In other words, this is because in the test number 17, the load applied on the inner area was the same as the load applied on the outer area. In the test numbers 10 to 12, which are inventive examples, the maximum value of heat flux in the area A was different from the maximum value of heat flux in the area B. This is because in the test numbers 10 to 12, the spring constant K1 of the inner member was different from the spring constant K2 of the outer member. In other words, in the test numbers 10 to 12, the load applied on the inner area was different from the load applied on the outer area. As a result, heat input distribution to the brake disk was non-uniform in the radial direction of the brake disk.

Referring to FIG. 17, in the test numbers 13 and 14, which are inventive examples, the maximum value of heat flux in the area A was different from the maximum value of heat flux in the area B. This is because, in the test numbers 13 and 14, the distance from the center of the pressing surface to the center of the inner member was different from the distance from the center of the pressing surface to the center of the outer member. In other words, in the test numbers 13 and 14, the load applied on the inner area was different from the load applied on the outer area. As a result, heat input distribution to the brake disk was non-uniform in the radial direction of the brake disk.

Referring to FIG. 18, in the test numbers 15 and 16, which are inventive examples, the maximum value of heat flux in the area A was different from the maximum value of heat flux in the area B. This is because, in the test numbers 15 and 16, the diameter of the belleville washer constituting the inner member was different from the diameter of the belleville washer constituting the outer member. In other words, in the test numbers 15 and 16, the spring constant of the inner member was different from the spring constant of the outer member. As a result, heat input distribution to the brake disk was non-uniform in the radial direction of the brake disk, for the same reason as the test numbers 10 to 12.

FIG. 19 illustrates relative values of bolt safety factors with respect to the test number 17. Referring to FIG. 19, bolt safety factors of the test numbers 10 to 16 were higher than the bolt safety factor of the test number 17. In other words, in the test numbers 10 to 16, stress imposed on bolts was suppressed. As described in Example 1, this is because heat input distribution to the brake disk was non-uniform in the radial direction of the brake disk.

Embodiments of the present invention have been described. However, embodiments described above are for illustration only for implementing the present invention. Accordingly, the present invention is not limited to the embodiments described above and may be subject to change for implementation as appropriate without departing from the scope thereof.

In the first embodiment, description has been made as to the case in which one arm of the brake caliper supports the inner pressing surface and the outer pressing surface. However, the support of the inner pressing surface and the outer pressing surface is not limited to the specific case. The inner pressing surface and the outer pressing surface may be supported by separate arms. In other words, one independent arm may support one pressing surface. Further, one arm may support one or more outer pressing surfaces only and another arm may support one or more inner pressing surfaces only.

In the above, description has been made as to the case in which the brake caliper includes two inner pressing surfaces and two outer pressing surfaces. However, the number of the inner pressing surfaces and the number of the outer pressing surfaces are not limited to the specific case. The brake caliper may include one inner pressing surface and one outer pressing surface. The brake caliper may include 3 or more inner pressing surfaces and 3 or more outer pressing surfaces. Further, the number of the inner pressing surfaces may be different from the number of the outer pressing surfaces. In short, it is only necessary that a total load applied on the inner area of the brake lining is different from a total load applied on the outer area. This is because, when the total load applied on the inner area is different from the total load applied on the outer area, heat input distribution to the brake disk is non-uniform. When the brake caliper includes a plurality of inner pressing surfaces, the total load applied on the inner area refers to a total of the loads on all the inner pressing surfaces. The same applies to the outer pressing surface.

The brake caliper of the embodiments may be a lever type as described above, or may apply a load on the rear face of the base plate directly by a piston, as with the case of a floating or opposed type. As with the case of a floating type, a load may be applied by a reaction force. In short, how a load is applied on the brake lining is not particularly limited. The brake caliper may include a plurality of brake cylinders.

In the above, description has been made as to the case in which the inner pressing surface and the outer pressing surface are in a circular shape. However, the shapes of the inner pressing surface and the outer pressing surface are not limited to the specific case. The inner pressing surface and the outer pressing surface may be in a polygonal shape.

In the above, description has been made as to the case in which when a plurality of bolt holes on the brake disk are projected onto the rear face of the base plate, the boundary between the inner area and the outer area is an arc on a circle passing through centers of the projected bolt holes. However, the boundary between the inner area and the outer area is not limited to the specific case. It is only necessary that the boundary between the inner area and the outer area passes through areas of the projected bolt holes.

In the second embodiment, description has been made as to the case in which only the spring constant is changed and the case in which only positions of the inner pressing surface and the outer pressing surface are changed, in order to make the load applied on the inner area and the load applied on the outer area different from each other. However, the disk brake device of the embodiment is not limited to the specific case. In the disk brake device of the embodiment, the spring constant of the inner member may be made different from the spring constant of the outer member, and also the distance from the center of the pressing surface to the center of the inner member may be made different from the distance from the center of the pressing surface to the center of the outer member.

REFERENCE SIGNS LIST

1: DISK BRAKE DEVICE
2: BRAKE DISK
3: BRAKE LINING
4: BRAKE CALIPER
5: AXLE
6: WHEEL
7: BOLT HOLE
8: BOLT
9: FRICTION MEMBER
10: BASE PLATE
11: SLIDING SURFACE
12: FRONT FACE OF BASE PLATE
13: REAR FACE OF BASE PLATE
14: INNER AREA
15: OUTER AREA
16: BOUNDARY
17: INNER PRESSING SURFACE
18: OUTER PRESSING SURFACE
19: ARM
20: BRAKE CYLINDER
21: FULCRUM
22: BRACKET
23: PRESSING PLATE
24: FRONT FACE OF PRESSING PLATE
25: REAR FACE OF PRESSING PLATE
26: INNER MEMBER
27: OUTER MEMBER
28: PRESSING SURFACE

Claims

1. A disk brake device for applying a brake on a wheel attached to an axle, the disk brake device comprising:

a brake disk having a plurality of bolt holes arranged on a sliding surface and on a same circle, the brake disk being fastened to the wheel by bolts inserted in the respective bolt holes;
a brake lining facing the brake disk, the brake lining including a friction member and a base plate for supporting the friction member;
a brake caliper configured to apply a load on a rear face of the base plate to press the friction member against the sliding surface,
wherein the rear face of the base plate is divided into an inner area and an outer area along an arcuate boundary centered at an axial center of the axle,
wherein when the plurality of bolt holes are projected onto the rear face of the base plate in a direction of the axle, the boundary passes through areas of the projected bolt holes, and

wherein the brake caliper includes an inner pressing surface that applies a load on the inner area and an outer pressing surface that applies a load on the outer area, and

the load applied on the inner area from the inner pressing surface is different from the load applied on the outer area from the outer pressing surface.

2. The disk brake device according to claim 1, wherein
of the load applied on the inner area from the inner pressing surface and the load applied on the outer area from the outer pressing surface, a ratio between the larger load and the smaller load is 1.3 or more to 6.0 or less.

3. The disk brake device according to claim 1, wherein
of the load applied on the inner area from the inner pressing surface and the load applied on the outer area from the outer pressing surface, a ratio between a width of the inner pressing surface or the outer pressing surface, whichever applies the larger load, in the radial direction of the brake disk and a width of the sliding surface of the brake disk in the radial direction is 0.4 or more, and
a ratio between a width of the inner pressing surface or the outer pressing surface, whichever applies the smaller load, in the radial direction of the brake disk and a width of the sliding surface of the brake disk in the radial direction is 0.25 or more.

4. The disk brake device according to claim 1, wherein
the brake caliper includes a plurality of the inner pressing surfaces and a plurality of the outer pressing surfaces, and a total load applied on the inner area from the plurality of inner pressing surfaces is different from a total load applied on the outer area from the plurality of outer pressing surfaces.

5. The disk brake device according to claim 1, wherein
the brake caliper includes one of the inner pressing surfaces and a plurality of the outer pressing surfaces, and a load applied on the inner area from the one inner pressing surface is different from a total load applied on the outer area from the plurality of outer pressing surfaces.

6. The disk brake device according to claim 1, wherein
the brake caliper includes a plurality of the inner pressing surfaces and one of the outer pressing surfaces, and a total load applied on the inner area from the plurality of inner pressing surfaces is different from a load applied on the outer area from the one outer pressing surface.

7. The disk brake device according to claim 1, wherein
the brake caliper includes: a pressing plate facing the rear face of the base plate; an inner member including the inner pressing surface, the inner member being disposed between the inner area of the base plate and the pressing plate and attached to the inner area of the base plate and the pressing plate; an outer member including the outer pressing surface, the outer member being disposed between the outer area of the base plate and the pressing plate and attached to the outer area of the base plate and the pressing plate; and a pressing surface that applies a load on a rear face of the pressing plate.

8. The disk brake device according to claim 7, wherein
the inner member and the outer member are springs, and
a spring constant of the inner member is different from a spring constant of the outer member.

9. The disk brake device according to claim 7 or 8, wherein
a distance from a center of the pressing surface to a center of the inner member is different from a distance from the center of the pressing surface to a center of the outer member.

FIG. 1

FIG. 2

FIG. 3

FIG. 4

FIG. 5

FIG. 6

FIG. 7

FIG. 8

FIG. 9

FIG. 10

FIG. 11

FIG. 12

FIG. 13

FIG. 14

FIG. 15

FIG. 16

FIG. 17

FIG. 18

FIG. 19

## INTERNATIONAL SEARCH REPORT

| International application No. |
| --- |
| PCT/JP2017/046816 |

A. CLASSIFICATION OF SUBJECT MATTER
Int.Cl. F16D55/22(2006.01)i, F16D65/02(2006.01)i, F16D65/12(2006.01)i

According to International Patent Classification (IPC) or to both national classification and IPC

B. FIELDS SEARCHED

Minimum documentation searched (classification system followed by classification symbols)
Int.Cl. F16D55/22, F16D65/02, F16D65/12

Documentation searched other than minimum documentation to the extent that such documents are included in the fields searched
| | |
| --- | --- |
| Published examined utility model applications of Japan | 1922-1996 |
| Published unexamined utility model applications of Japan | 1971-2018 |
| Registered utility model specifications of Japan | 1996-2018 |
| Published registered utility model applications of Japan | 1994-2018 |

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
| --- | --- | --- |
| A | JP 2016-70292 A (NIPPON STEEL & SUMITOMO METAL CORP.) 09 May 2016, paragraphs [0002]-[0004], fig. 1A, 1B, 2A, 2B, 2C (Family: none) | 1-9 |
| A | JP 2007-147041 A (TOYOTA MOTOR CORP.) 14 June 2007, paragraphs [0031]-[0033], fig. 4 (Family: none) | 1-9 |
| A | JP 2006-9862 A (SUMITOMO METAL INDUSTRIES, LTD.) 12 January 2006, paragraphs [0032]-[0034], fig. 1-2 (Family: none) | 1-9 |

☐ Further documents are listed in the continuation of Box C.  ☐ See patent family annex.

| | |
| --- | --- |
| * Special categories of cited documents: | "T" later document published after the international filing date or priority date and not in conflict with the application but cited to understand the principle or theory underlying the invention |
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
| --- | --- |
| 29 March 2018 (29.03.2018) | 10 April 2018 (10.04.2018) |

| Name and mailing address of the ISA/ | Authorized officer |
| --- | --- |
| Japan Patent Office 3-4-3, Kasumigaseki, Chiyoda-ku, Tokyo 100-8915, Japan | Telephone No. |

Form PCT/ISA/210 (second sheet) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2009257578 A

- JP 2014059011 A